## Europäisches Patentamt

## European Patent Office

## Office européen des brevets

(19)

(11) Veröffentlichungsnummer: **0 016 075 B1**

(12) **EUROPÄISCHE PATENTSCHRIFT**

(45) Veröffentlichungstag der Patentschrift:
**18.05.83**

(21) Anmeldenummer: **79900743.0**

(22) Anmeldetag: **06.07.79**

(86) Internationale Anmeldenummer:
**PCT/DE 79/00070**

(87) Internationale Veröffentlichungsnummer:
**WO 80/00194 (07.02.80** Gazette **80/3)**

(51) Int. Cl.³: **G 02 B 5/08,** G 02 B 1/00,
C 04 B 35/52

(54) **SPIEGEL AN EINER SPIEGELREFLEX-EINRICHTUNG.**

(30) Priorität: **07.07.78 DE 2829999**

(43) Veröffentlichungstag der Anmeldung:
**01.10.80 Patentblatt 80/20**

(45) Bekanntmachung des Hinweises auf die Patenterteilung:
**18.05.83 Patentblatt 83/20**

(84) Benannte Vertragsstaaten:
**FR**

(56) Entgegenhaltungen:
**DE-A-2 430 486**
**DE-B-1 055 474**
**GB-A-644 379**
**US-A-3 109 712**
**US-A-3 446 593**
**US-A-3 833 347**
**US-A-3 900 328**

(73) Patentinhaber: **ARNOLD & RICHTER CINE TECHNIK GMBH & CO. BETRIEBS KG.,** Türkenstrasse 89,
**D-8000 München 40 (DE)**

(72) Erfinder: **KASTNER, Erich,** Türkenstrasse 93/III,
**D-8000 München 40 (DE)**

(74) Vertreter: **Weinstein, Zinovi et al, Cabinet Z. WEINSTEIN 20,** Avenue de Friedland, F-75008 Paris (FR)

ACTORUM AG

## Spiegel an einer Spiegelreflex-Einrichtung

Die Erfindung bezieht sich auf einen Spiegel an einer Spiegelreflex-Einrichtung, vorzugsweise für Film- und Fotokameras, insbesondere einen rotierenden, oszillierenden oder Klapp-Spiegel.

Die Spiegel von derartigen Einrichtungen sind optische Präzisionsspiegel, die meistens aus Glas oder auch aus Metall hergestellt sind. Aus hinlänglich bekannten dynamischen Gründen sollen solche bewegten Spiegel möglichst geringes Gewicht aufweisen, gleichgültig ob es sich um rotierende, oszillierende oder Klapp-Spiegel handelt. Niedriges Gewicht solcher Spiegel kann bedingt durch geringe Dicke angestrebt werden, was jedoch wie bei allen Präzisionsspiegeln aufgrund der erforderlichen Oberflächengüte seine Grenze im Mindestverhältnis zwischen Spiegel-Dicke und -Grösse hat. Bei Präzisionsgeräten, wie z.B. Spiegelreflex-Filmkameras, ist es aus konstruktiven Gründen oft erforderlich, die Spiegelumlaufverschlüsse nicht nur statisch, sondern aufgrund der hohen Drehzahlen zwischen 1500 und 6000 upm auch dynamisch auszuwuchten, was bei einteiligen unsymmetrischen Spiegeln meistens eine Zusatzmasse erfordert, um das notwendige Gegengewicht so zu plazieren, dass es den optischen Strahlen-Durchtritt am rotierenden Spiegel-System nicht behindert. Da die Wuchtmassen für eine dynamische Wuchtung, bedingt durch die derzeit möglichen Spiegel-Gewichte, relativ gross sind, reichen die Platzverhältnisse für deren Unterbringung zwischen Spiegelumlaufverschluss und Filmebene meist gar nicht aus, selbst wenn die Wuchtmassen aus Wolfram gefertigt sind. Je grösser die Wuchtmassen sein müssen, umso abträglicher wirkt sich zusätzlich deren grössere Trägheit auf die heute allgemein üblichen präzisionsgesteuerten Kamera-Antriebe aus. Eine unerwünscht grosse Trägheit, bedingt durch zu grosses Spiegelgewicht, wirkt sich auch bei oszillierenden oder Klapp-Siegeln dynamisch sehr ungünstig aus.

Der Erfindung liegt die Aufgabe zugrunde, den Spiegel der eingangs geschilderten Gattungen dadurch zu verbessern, dass bei gleicher optischer Oberflächengüte eine Gewichtsverringerung erreicht wird, wodurch sowohl die allgemeinen Auswuchtbedingungen, insbesondere auch die dynamischen Auswuchtmöglichkeiten bei beschränkten Platzverhältnissen besonders für einteilige, unsymmetrische, rotierende Spiegel verbessert werden und die Spiegelträgheit bei rotierenden, oszillierenden und Klapp-Spiegeln wesentlich verringert wird.

Die Lösung der gestellten Aufgabe durch die Erfindung besteht darin, dass bei einem Spiegel der hier in Rede stehenden Gattungen erfindungsgemäss das Spiegelträgermaterial aus glasartiger Kohle besteht. Eine Spiegelreflex-Einrichtung mit dem Spiegel aus diesem Trägermaterial vermittelt eine Vielzahl von im folgenden aufgezeigten erheblichen Vorteilen, wobei zur besseren Unterscheidung das Spiegelträgermaterial, im Gegensatz zum Spiegelbelag, nur noch als Substrat bezeichnet wird.

1. Das spezifische Gewicht der glasartigen Kohle ist etwa 40% kleiner als die leichten, nach dem heutigen Stand der Technik zur Verfügung stehenden Glasarten, was aus oben geschilderten dynamischen Gründen für die Auswuchtung und das Trägheitsverhalten beweglicher Spiegel von ausschlaggebender Bedeutung ist.

2. Das Spiegel-Substrat aus reinem Kohlenstoff, vorzugsweise der sog. glasartigen Kohle, ist wesentlich temperaturbeständiger als Glas und aufgrund seines gegenüber Glas im Mittel nur halb so grossen Ausdehnungskoeffizienten mit etwa $3.10^{-6}$ pro Grad noch verzugsfreier als dieses. Diese Eigenschaft der hohen Temperaturbeständigkeit bewährt sich besonders bei Vakuum-Bedampfungen mit komplizierten dichroitischen Mehrschicht-Belägen, wie z.B. Kaltlichtspiegeln, da hierbei das Spiegel-Substrat Temperaturen bis über 600 K ausgesetzt wird, was bei vielen optischen Glasarten bereits die hohe Oberflächengüte zerstört. Aber auch in der praktischen Anwendung von professionellen Kameras mit Spiegelreflex-Einrichtungen können nicht unerhebliche Temperaturschwankungen bis etwa 130 K auftreten, z.B. im Gepäckraum eines Überseeflugzeuges oder bei Polarexpeditionen sind Temperaturen von ca. 220 K keine Seltenheit; im Gegensatz zu dieser sehr niederen Temperatur herrschen im Kofferraum eines in der Sonne geparkten Autos oder bei technischen Aufnahmen im Labor oder z.B. in der Nähe eines Hochofens Temperaturen bis etwa 350 K.

3. Das erfindungsgemäss benutzte Spiegel-Substrat in Form von glasartiger Kohle ist aufgrund seiner grossen Härte (Mohs-Härte über 7) und seiner absoluten Korrosionsbeständigkeit optisch optimal polierbar und die erreichte Politur ohne zusätzliche Schutzmassnahmen haltbar. Im Gegensatz hierzu sind Präzisions-Glasspiegel alsbald nach dem Polieren zu verspiegeln, weil Lagerzeiten im polierten Zustand genauso wie ungeeignetes Verpackungsmaterial sehr leicht zu Oxydationsflecken führen.

4. Da dieses Spiegel-Substrat immun gegen alle Umwelteinflüsse ist, lässt es sich als Vorbehandlung zur Vakuum-Bedampfung auch besonders gut reinigen, sogar mit sehr aggressiven Mitteln, was bei komplizierten dichroitischen Mehrschicht-Spiegelbelägen, z.B. bei Kaltlichtspiegeln, die bis über 30 Schichten aufweisen können, unabdingbare Voraussetzung ist. Aggressive Reinigungsmittel reinigen zwar äusserst gründlich, können aber bei üblichen, zum Teil sehr empfindlichen Gläsern leicht zu unangenehmen Oxydationsflecken führen, was durch die hohe Resistenz beim Spiegel-Substrat aus glasartiger Kohle gänzlich ausgeschlossen ist. Selbst Flusssäure könnte zur Intensivreinigung, ohne schädigende Einflüsse zu hinterlassen, benutzt werden, was dann besonders wichtig sein kann, wenn Fehl-Bedampfungen ohne Zerstörung des Spiegel-Substrates entfernt werden müssen.

5. Das erfindungsgemässe Spiegel-Substrat lässt sich im Hochvakuum nach unter Pos. 4 beschriebener Reinigung ohne irgendwelche schädigenden Nebenwirkungen mit besonders guter Haftfestigkeit bedampfen. Das Substrat erzeugt beim Evakuieren auch keinen störenden Dampfdruck.

6. Für bestimmte Anwendungsfälle, bei welchen es wichtig ist, dass bestimmte Spektral-Anteile ausserhalb des reflektierten Lichts (z.B. Infrarot) nicht durch den Spiegel hindurchgelassen werden, ist das erfindungsgemässe Spiegel-Substrat deshalb besonders vorteilhaft einzusetzen, weil der Kohlenstoff diese Spektral-Anteile absorbiert.

Die sog. glasartige Kohle, aus welcher erfindungsgemäss das Spiegel-Substrat einer Spiegelreflex-Einrichtung nach dem Gattungsbegriff hergestellt wird, wird durch kontrollierte Verkokung von dreidimensional vernetzten Kunstharzen hergestellt. Die für die Erfindung erforderlichen physikalischen und technologischen Eigenschaften dieses Werkstoffs sind durch eine entsprechende Temperaturbehandlung erreichbar. Dieser Werkstoff ist unter der Markenbezeichnung «Glasartige Kohle z.B. Typ ES 10» im Handel und kann von der Firma Ringsdorff bezogen werden.

Die Entwicklung dieses Werkstoffs wurde gezielt fürs Chemielabor, die Metallurgie und die Halbleiterherstellung betrieben. Im Chemielabor gibt es Tiegel, Schiffchen, Schalen zum Abrauchen, Eindampfen, Schmelzen und Aufschliessen sowie Rädchenelektroden für die Spektralanalyse aus Flüssigkeiten, die aus der sog. glasartigen Kohle hergestellt sind. In der Metallurgie werden aus diesem Werkstoff Schmelztiegel und Verdampferschiffchen für Vakuumverdampfung hergestellt. Schliesslich werden in der Halbleiterherstellung aus diesem Werkstoff Tiegel und Platten für die Epitaxie hergestellt.

Da bei der Feinbearbeitung des handelsüblichen glasartigen Kohle-Materials an dessen polierter Oberfläche eine für optische Zwecke zu grosse Anzahl von Poren im Microbereich offengelegt wurden, mussten vom Hersteller noch Massnahmen getroffen werden, diese Poren für den vom Anmelder beschriebenen Anwendungsbereich zu beseitigen, was durch eine zusätzliche Vakuum-Behandlung bei der Herstellung des dreidimensional vernetzten Kunstharz-Vorproduktes ermöglicht wurde.

Da die Vorteile der verringerten Spiegelträgheit durch Verwendung glasartiger Kohle als Spiegel-Substrat zeichnerisch nicht darstellbar sind, beschränkt sich die nachstehende Beschreibung der Erfindung anhand der Zeichnung nur auf ein Anwendungsbeispiel eines rotierenden, einteiligen, unsymmetrischen, dynamisch ausgewuchteten Spiegelumlaufverschlusses für eine Laufbild-Filmkamera bei beschränkten Platzverhältnissen mit glasartiger Kohle als Spiegel-Substrat.

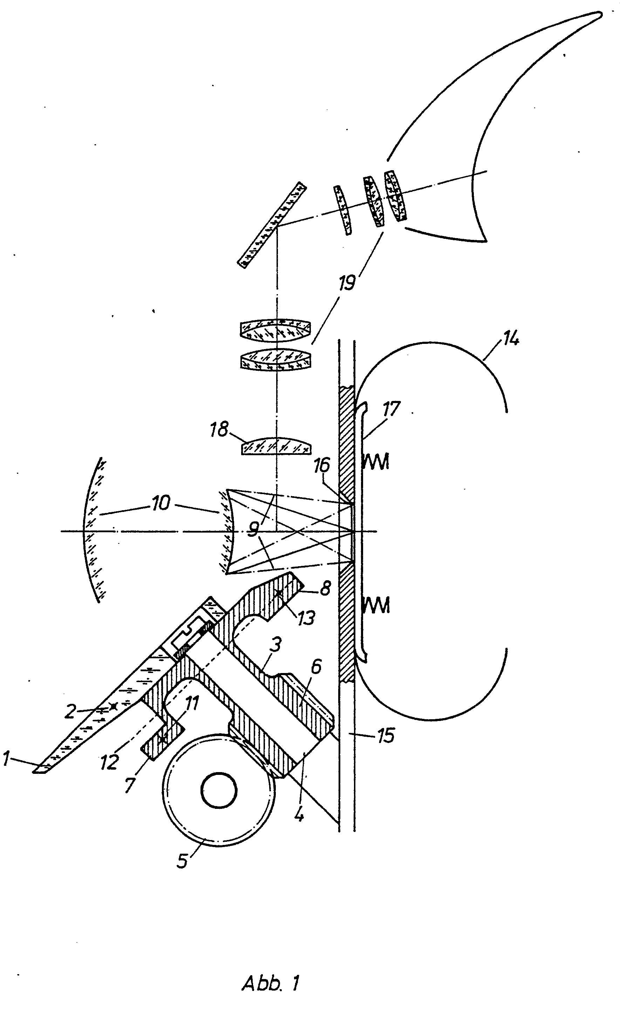

In der Abb. 1 ist der Spiegelumlaufverschluss einer Filmkamera so dargestellt, dass der Spiegel das Filmbild zur Belichtung freigibt.

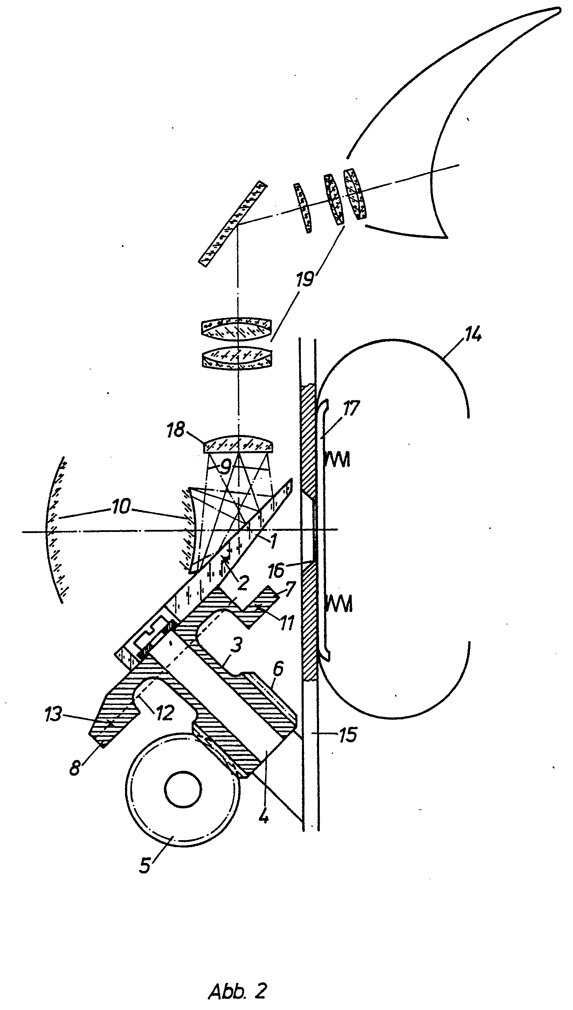

Bei der Darstellung in Abb. 2 deckt der Spiegel des Umlaufverschlusses das Filmbild während der Film-Transportphase ab, so dass der Aufnahmestrahlengang in dieser Zeit an der Reflexionsfläche des Spiegels auf die Sucher-Mattscheibe umgelenkt wird.

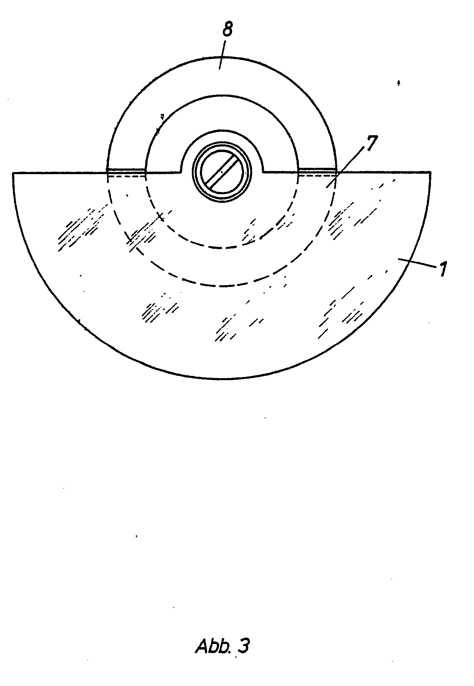

Die Abb. 3 stellt den unsymmetrischen einteiligen Spiegelumlaufverschluss in der Draufsicht auf die Reflexionsfläche dar.

Aus Abb. 1 und 2 ist die prinzipielle Anordnung des Spiegelumlaufverschlusses ersichtlich, wobei 1 den Spiegel aus glasartiger Kohle und 2 seine Schwerpunktlage darstellt. Auf dem rotierenden Trägerteil 3 ist der Spiegel 1 z.B. durch Verkleben befestigt. Das Trägerteil 3 des Spiegels ist z.B. auf einem Stehbolzen 4 gelagert und durch das Zahnradpaar 5 und 6 angetrieben. Dieses Spiegelträgerteil 3 erfüllt ausserdem die Funktion einer Zusatzmasse 7 und einer Ausgleichsmasse 8, die am Trägerteil je eine etwa halbkreisförmige Ausbildung gleichen Durchmessers aufweisen. Wie aus der Abb. 1 weiterhin ersichtlich, könnte zur Voraussetzung einer dynamischen Auswuchtung des Spiegels 1 die Schwerpunktlage einer Ausgleichsmasse niemals genau gegenüberliegend vom Spiegelschwerpunkt 2 angeordnet sein, weil sonst die Ausgleichsmasse den Aufnahmestrahlengang 9 des Aufnahmeobjektivs 10 beschneiden würde. Aus diesem Grund wird eine Zusatzmasse 7 benötigt, die mit ihrer hinter dem Spiegel 1 angeordneten Schwerpunktlage 11 und der Spiegel-Schwerpunktlage 2 eine gemeinsame resultierende Schwerpunktlage in einer Wuchtebene 12 hinter dem Spiegel 1 bildet, so dass der Ausgleichsmassen-Schwerpunkt 13 in dieser Wuchtebene 12 angeordnet sein kann, ohne dass dadurch die Ausgleichsmasse 8 den Aufnahmestrahlengang 9 wie aus Abb. 1 ersichtlich beeinträchtigt. Bei der beschriebenen Anordnung des Spiegelumlaufverschlusses läuft der Film 14 zwischen der objektivseitigen Filmführung 15 mit der Bildfensterapertur 16 und der Andruckschiene 17. Die intermittierend beleuchtete Suchermattscheibe 18 wird über eine konventionelle Sucherlupe 19 betrachtet. Die Positionen zwischen Abb. 1 und Abb. 2 sind völlig identisch, nur steht der Spiegelumlaufverschluss in der Abb. 2 im Gegensatz zur Abb. 1 in der für den Film geschlossenen Stellung.

Aus Abb. 3 ist die beispielhafte Form eines einteiligen unsymmetrischen Spiegelumlaufverschlusses ersichtlich, wobei 1 den eigentlichen Spiegel und der gestrichelte Radius die hinter dem Spiegel liegende Zusatzmasse 7 darstellt. Das Gegengewicht als Ausgleichsmasse ist durch den Halbkreis 8 gekennzeichnet.

Diese ausführliche Erläuterung des zeichnerischen Beispiels veranschaulicht, wie schwierig es ist, eine einwandfreie dynamische Auswuchtung zu erreichen, wenn erstens die zur Verfügung stehenden Platzverhältnisse beschränkt sind und zweitens die Trägheit des rotierenden Spiegelumlaufverschlusses in kleinen Grenzen gehalten werden soll.

Nur durch niederes Gesamtgewicht des rotierenden Spiegelumlaufverschlusses, was fast ausschliesslich durch das kleine spezifische Gewicht des aus glasartiger Kohle hergestellten Spiegels bedingt ist, konnten beide gestellten Forderungen erfüllt werden.

**Patentanspruch**

Spiegel an einer Spiegelreflex-Einrichtung, vorzugsweise für Film- und Fotokameras, insbesondere rotierender, oszillierender oder Klapp-Spiegel, dadurch gekennzeichnet, dass das Spiegelträgermaterial aus glasartiger Kohle besteht.

**Claim**

Mirror in a mirror reflex system, preferably for film cameras and photo-cameras, in particular rotating, oscillating or folding mirror, characterized in that the mirror-supporting material consists of vitreous carbon.

**Revendication**

Miroir dans un système reflex à miroir, de préférence pour des caméras de prises de vues cinématographiques et des appareils photographiques, en particulier miroir tournant, oscillant ou pliant, caractérisé en ce que la matière porte-miroir consiste en du carbone vitreux.

*Abb. 1*

*Abb. 2*

Abb. 3